# EUROPÄISCHE PATENTSCHRIFT

(11) **EP 0 720 993 B1**
(45) Veröffentlichungstag und Bekanntmachung des Hinweises auf die Patenterteilung: **24.10.2001**
(21) Anmeldenummer: 95120656.4
(22) Anmeldetag: 28.12.1995
(51) Int. Cl.: C08F 290/08, C09J 4/06, C09D 4/06

(54) **Radikalisch polymerisierbare Zubereitungen und ihre Verwendung**
Radically polymerisable compositions and their use
Compositions polymérisables de manière radicalaire et leur utilisation

(30) Priorität: 05.01.1995 DE 19500241
(43) Veröffentlichungstag der Anmeldung: 10.07.1996
(73) Patentinhaber: DELO Industrieklebstoffe GmbH & Co. KG, 86899 Landsberg (DE)
(72) Erfinder: Eckhardt, Gunter, Dr., D-86899 Landsberg (DE); Eser, Stefan, D-86899 Landsberg (DE)
(74) Vertreter: Bunke, Holger, Dr.rer.nat. Dipl.-Chem.

(56) Entgegenhaltungen:
- EP-A- 0 333 222
- EP-A- 0 620 255
- EP-A- 0 670 341
- DE-A- 4 324 322
- US-A- 3 391 054

## Beschreibung

Die Erfindung betrifft mit sehr hoher Reaktionsgeschwindigkeit radikalisch polymerisierbare Zubereitungen, die eine gute Haftung auf Kunststoffen aufweisen.

Weiterhin betrifft die Erfindung die Verwendung dieser Zubereitungen als Reaktionsklebstoffe sowie zum Vergießen und Beschichten von Substraten.

Es ist seit langem bekannt, radikalisch polymerisierbare Zubereitungen für das Verkleben, Vergießen, Abdichten und Beschichten von Substraten einzusetzen (vgl. DE-PS 899 244 und 974 919 bzw. EP-A-0 670 341).

Dabei kann die Radikalbildung auf unterschiedlichen Wegen, beispielsweise durch homolytischen Zerfall von Peroxoverbindungen unter der Einwirkung von Wärme, durch katalysierten Zerfall von Peroxoverbindungen mit Hilfe von Redox-Systemen oder durch Bestrahlung der Zubereitungen erfolgen. Eine Kombination verschiedener Methoden der Radikalbildung ist ebenfalls möglich.

Eine besondere Bedeutung besitzt die Radikalbildung aus Photoinitiatoren, die bei Bestrahlung mit Licht einer Wellenlänge von 280 bis 600 nm in Radikale zerfallen. Als Photoinitiatoren sind eine Reihe von Verbindungsklassen bekannt, die in Konzentrationen von 0,1 bis 10 Gew.-% eingesetzt werden, wobei die Radikalbildung bei unterschiedlichen Wellenlängen, mit unterschiedlicher Effektivität und unter Bildung von mehr oder weniger störenden Zerfallsprodukten erfolgt.

Die Reaktionsgeschwindigkeit der radikalischen Polymerisation hängt bei derartigen Zubereitungen von vielen Faktoren ab, beispielsweise von der Zusammensetzung der Monomeren, der Art und Konzentration der Photoinitiatoren, der Art und Konzentration von Beschleunigern, aber auch vom Emissionsspektrum und der Intensität der Lampen sowie von der Belichtungszeit.

Bei der radikalischen Polymerisation kann es jedoch infolge der entstehenden Polymerisationswärme zu lokalen Überhitzungen mit negativen Folgen für den Klebverbund kommen, insbesondere wenn die radikalisch polymerisierenden Zubereitungen in dickeren Schichten verarbeitet und mit einer hohen Strahlungsdosis belichtet werden.

Andererseits sind für die Verwendung in hochautomatisierten industriellen Füge- und Beschichtungsverfahren Zubereitungen erforderlich, die innerhalb von 10 bis 500 Millisekunden (ms) zumindest bis zur Hantierbarkeit der gefügten Verbunde aushärten. Dabei darf während dieser Aushärtungsphase keine so große Polymerisationswärme entstehen, daß eine Schädigung der Substrate oder der Klebstoffschicht eintritt.

Besonders bei der automatisierten taktweisen Verklebung von Kunststoffteilen bei sehr kurzen Taktzeiten ist das schnelle Erreichen einer guten Anfangshaftung ohne schädigende Erwärmung sehr wichtig.

Aus EP-A-0 670 341 sind Prepolymere in Form von acrylierten und/oder methacrylierten Mischpolyethern mit Molmassen von 4000 bis 20 000 bekannt, die radikalisch polymerisierbar sind und zur Herstellung von Zubereitungen für das Verkleben, das Abdichten, Beschichten und Vergießen verwendet werden können. Die entsprechenden Zubereitungen enthalten 5 bis 99 Gew.-% solcher Prepolymere, radikalisch polymerisierbare Säuremonomere, Vernetzermonomere und/oder Verdünnermonomere sowie Katalysatoren, Radikalbildner oder zur Bildung freier Radikale befähigte Redox-Systeme, Inhibitoren, Stabilisatoren, Haftvermittler und/oder weitere übliche Hilfs- und Zusatzstoffe.

Die bisher vorgeschlagenen radikalisch polymerisierbaren Zubereitungen erfüllten jedoch die oben erwähnte spezifische Kombination von Eigenschaftsforderungen nicht in befriedigender Weise, weil sie entweder mit genügend hoher Reaktionsgeschwindigkeit, jedoch mit Überhitzungsschäden, z.B. Blasenbildung, oder aber ohne Überhitzungsschäden, jedoch zu langsam aushärteten. Außerdem mußte zur Erhöhung der Reaktionsgeschwindigkeit der Anteil der Zubereitungen an (co-)-polymerisierbaren freien Säuren, z.B. Acrylsäure und Methacrylsäure, erhöht werden, was zu einer Verschlechterung der Wasserbeständigkeit der damit realisierten Verklebungen führte.

Der Erfindung liegt deshalb die Aufgabe zugrunde, eine durch radikalische Polymerisation härtende Zubereitung bereitzustellen, die sich durch eine sehr hohe Reaktionsgeschwindigkeit, mindestens bis zum Erreichen der Hantierbarkeit des Verbundes, ohne dessen thermische Schädigung auszeichnet und die bei Kunststoffverklebungen sehr schnell zu einer ausreichenden Anfangsfestigkeit, aber auch zu einer guten Endfestigkeit des Klebverbundes führt.

Diese Aufgabe wird erfindungsgemäß gelöst durch eine radikalisch polymerisierbare Zubereitung, die, jeweils bezogen auf 100 Masseteile der Zubereitung, besteht aus
(A) 0,01 bis 50 Masseteilen eines Umsetzungsproduktes aus einem Epoxysilan und mindestens einem Vertreter der Gruppe Acrylsäure, Methacrylsäure, Acrylsäureaddukte der allgemeinen Formel 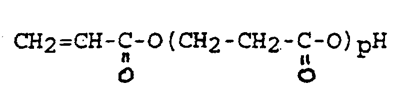 worin p eine ganze Zahl von 1 bis 10 bedeutet, und Umsetzungsprodukte von Acrylsäure und Methacrylsäure mit Diglycidylether-Dicarbonsäureaddukten, welche Umsetzungsprodukte erhältlich sind, indem man in einer ersten Stufe (Meth-)acrylsäure an den Diglycidylether in einem Molverhältnis von 0,8 : 1 bis 1,8 : 1 addiert und in einer zweiten Stufe die Dicarbonsäure addiert;
(B) 0,01 bis 80 Masseteilen von mindestens einem Vertreter der Gruppe Acrylsäure, Methacrylsäure, Acrylsäureaddukte der allgemeinen Formel 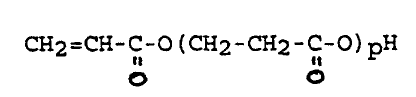 worin p eine ganze Zahl von 1 bis 10 bedeutet, und Umsetzungsprodukte von Acrylsäure und Methacrylsäure mit Diglycidylether-Dicarbonsäureaddukten, welche Umsetzungsprodukte erhältlich sind, indem man in einer ersten Stufe (Meth-)acrylsäure an den Diglycidylether in einem Molverhältnis von 0,8 : 1 bis 1,8 : 1 addiert und in einer zweiten Stufe die Dicarbonsäure addiert;
(C) 0,01 bis 50 Masseteilen von Prepolymeren mit Doppelbindungsäquivalentmassen von 500 bis 4000 g/mol und Molmassen von 1500 bis 8000 g/mol, die mindestens einer der folgenden Verbindungsklassen angehören; Polyethermulti(meth-)acrylate, Polyestermulti(meth-)acrylate, Alkylenmultiurethanmulti(meth-)acrylate, Polyethermultiurethanmulti(meth-)acrylate, Polyestermultiurethanmulti(meth-)acrylate, Polyether-multiharnstoffmultiurethanmulti(meth-)acrylate;
(D) 0,01 bis 50 Masseteilen von ein- und mehrfunktionellen (Meth-)acrylatmonomeren als Verdünnermonomere mit Doppelbindungsäquivalentmassen von 67 bis 500 g/mol und Molmassen von 67 bis 1500 g/mol;
(E) 0,01 bis 10 Masseteilen von bei Bestrahlung mit Licht einer Wellenlänge von 280 bis 550 nm radikalbildenden Initiatoren, Peroxoverbindungen oder Gemischen solcher Initiatoren mit Peroxoverbindungen;
(F) 0 bis 50 Masseteilen von Modifikatoren, ausgewählt aus der Gruppe der Haftvermittler auf Silanbasis, Photostabilisatoren, Thermostabilisatoren, Inhibitoren, Komplexbildner, Farbstoffe, Füllstoffe, Thixotropiermittel und Beschleuniger.

Die radikalische Polymerisation bzw. Härtung der erfindungsgemäßen Zubereitungen kann entweder durch Bestrahlung oder Erwärmung oder mit Hilfe von Beschleunigerzubereitungen allein erfolgen oder durch Anwendung einer beliebigen Kombination aus diesen drei die Härtung auslösenden Mechanismen.

In der vorliegenden Beschreibung werden anstelle der früher üblichen Begriffe "Gewichtsteile", "Molekulargewicht" usw. die physikalisch exakten Begriffe "Masseteile", "Molmasse" usw. verwendet. Unter "Doppelbindungsäquivalentmasse" ist der Quotient aus Molmasse und der Anzahl der Doppelbindungen im Molekül zu verstehen. "Säureäquivalentmasse" bedeutet entsprechend: Quotient aus Molmasse und Anzahl der Carboxylgruppen im Molekül.

Die erfindungsgemäß einzusetzenden Umsetzungsprodukte aus Epoxysilanen und (Meth-)acrylsäure oder (Meth-)acrylsäureaddukten (Komponente (A)) werden hergestellt aus a) Epoxysilanen der allgemeinen Struktur 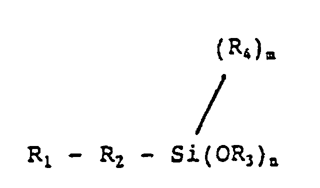 mit
R₁ = 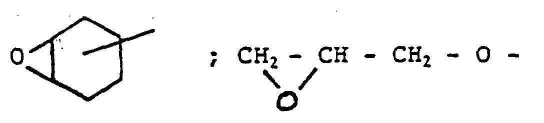 oder 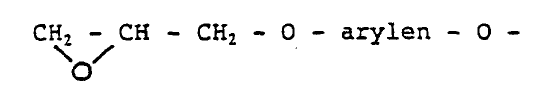
R₂ = alkylen-, arylen-, alkarylen- aralkylen-
R₃ = Alkyl mit 1 bis 4 C-Atomen
R₄ = Alkyl mit 1 bis 4 C-Atomen
n = 1, 2, 3
m = 0, 1, 2
und n + m = 3
und aus b) Acrylsäure, Methacrylsäure, Acrylsäureaddukten der allgemeinen Formel 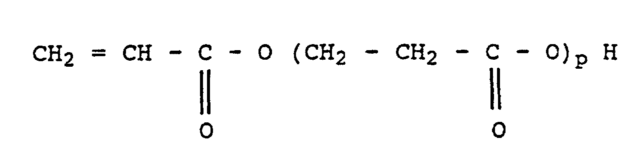 worin ₚ = eine ganze Zahl von 1 bis 10 bedeutet,
und/oder Addukten der (Meth-)acrylsäure wie z. B. den Umsetzungsprodukten von Acrylsäure und Methacrylsäure mit Diglycidylether-Dicarbonsäureaddukten. Letztere werden hergestellt, indem man in einer ersten Stufe (Meth-)acrylsäure an den Diglycidylether addiert (Molverhältnis 0,8 : 1 bis 1,8 : 1) und in einer zweiten Stufe die Dicarbonsäure addiert. Das so erhaltene (Meth-)acrylsäure-Diglycidylether-Dicarbonsäureaddukt wird dann mit dem Epoxysilan zu der erfindungsgemäß als Komponente (A) einzusetzenden Verbindung umgesetzt.

Die Herstellung der erfindungsgemäß einzusetzenden Addukte erfolgt vorteilhafterweise im Zuge einer "Ein-Topf-Reaktion" bei Temperaturen von 10 bis 120°C unter katalytischer Wirkung basischer Verbindungen. Als katalytisch wirksame basische Verbindungen können die Oxide, Hydroxide und Salze der Elemente der 1. und 2. Hauptgruppe des Periodensystems, aber auch Amine und Ammoniumverbindungen verwendet werden, und zwar in einer Konzentration von 0,005 bis 5 Masse-% der Reaktionsmischung. So können beispielsweise die Oxide, Hydroxide oder Carbonate in der überschüssigen Säure gelöst werden. Als Amine können primäre, sekundäre und tertiäre, ggfs. auch polycyclische Amine verwendet werden. Als primäre oder sekundäre Amine kommen auch Aminosilane in Betracht. Bevorzugte Amine sind Aminopropyl-trimethoxysilan und Dimethylaminobenzoesäureester.

Das jeweilige Reaktionsprodukt kann direkt ohne vorherige Reinigung oder auch nach einem Reinigungsschritt zur Herstellung der erfindungsgemäßen Zubereitungen eingesetzt werden.

Die erfindungsgemäßen Zubereitungen enthalten als Komponente (B) radikalisch polymerisierbare Säuren, nämlich Methacrylsäure und/oder Acrylsäure und/oder (Meth-acrylsäureaddukte, wie sie vorstehend als Reaktionspartner für die Silanumsetzungsprodukte beschrieben worden sind.

Die als Komponente (C) einzusetzenden Prepolymeren gehören mindestens einer der nachfolgend genannten Verbindungsklassen an:
Polyethermulti(meth-)acrylate, Polyestermulti(meth-) acrylate, Alkylenmultiurethanmulti(meth-)acrylate, Polyethermultiurethanmulti(meth-)acrylate, Polyestermultiurethanmulti(meth-)acrylate und Polyethermultiharnstoffmultiurethanmulti(meth-)acrylate.

Diese Prepolymeren haben Molmassen im Bereich von 1500 bis 8000 g/mol und Doppelbindungsäquivalentmassen von 500 bis 4000 g/mol.

Ein bevorzugt eingesetzter Vertreter der letztgenannten Verbindungsklasse ist das Umsetzungsprodukt eines Polyetherdiamins mit dem partiellen Addukt von Hydroxyalkyl(meth-)acrylaten mit trimerisierten Diisocyanaten, wie es in der DE-OS 43 43 246 beschrieben ist.

Als Verdünnermonomere (Komponente (D)) kommen ein- und mehrfunktionelle (Meth-)acrylatmonomere mit Molmassen von 67 bis 1500 g/mol und Doppelbindungsäquivalentmassen von 67 bis 500 g/mol in Betracht. Typische Vertreter dieser Verbindungsklasse sind z. B. Hydroxypropylmethacrylat, Hydroxyethylmethacrylat, Isobornylacrylat, Isobornylmethacrylat, Butylglykolmethacrylat, Acetylglykolmethacrylat, Triethylenglykoldimethacrylat, Polyethylenglykol-dimethacrylat, 2-Phenyl-ethylmethacrylat, 2-Ethylhexylmethacrylat, Cyclohexylmethacrylat und Laurylmethacrylat.

Bei der radikalischen Polymerisation bzw. Härtung der erfindungsgemäßen Zubereitungen ist es unerheblich, ob die Bildung freier Radikale durch den homolytischen Zerfall von peroxidischen Verbindungen oder Diazoverbindungen, durch einen Redoxinduzierten Zerfall von Peroxiden, durch strahlungsinduzierten Zerfall geeigneter Photoinitiatoren oder durch hochenergetische Strahlung erfolgt.

Nach einer bevorzugten Ausführungsform der Erfindung werden die Zubereitungen als einkomponentige Massen formuliert, die unter Einwirkung von Licht des Wellenlängenbereiches von 380 bis 550 nm aushärten.

Diese Massen enthalten als Komponente (E) mindestens einen Photoinitiator, der bei Bestrahlung mit Licht dieses Wellenlängenbereichs unter Bildung freier Radikale zerfällt.

Typische Verbindungsklassen dieser Photoinitiatoren sind z. B. Benzophenone, Benzoinether, Benzildiketale, 1,2-Diketone, Thioxanthone und Mono- und Bis-acylphosphinoxide.

Die Verwendung von mehreren Photoinitiatoren, die in unterschiedlichen Wellenlängenbereichen absorbieren, kann zur besseren Ausnutzung der eingestrahlten Energie günstig sein. Weiterhin können zur Erhöhung der Effektivität Photoaktivatoren wie Amine und Phosphite eingesetzt werden. Die Radikalbildung kann auch durch übliche Redox-Initiierungssysteme erreicht werden. Hierbei ist eine zweikomponentige Verarbeitung nach einem A/B-Verfahren oder auch nach No-mix-Varianten (Härterlack, Aktivatorzubereitung) möglich.

Nach einer weiteren Variante der Aushärtung wird die zu einer "Anhärtung" ausreichende Radikalmenge durch den Photoinitiatorzerfall erzeugt, und die Bildung der zur Erreichung der Endfestigkeit notwendigen Radikalmenge erfolgt durch einen Zerfall von Peroxoverbindungen, der sowohl homolytisch durch Temperaturerhöhung oder katalysiert durch Redox-Systeme verlaufen kann (Nachbestrahlung und/oder Erwärmung).

Weiterhin können die erfindungsgemäßen Zubereitungen als Komponente (F) Modifikatoren enthalten, die aus den Gruppen der Haftvermittler auf Silanbasis, Photostabilisatoren, Thermostabilisatoren, Inhibitoren, Komplexbildner, Farbstoffe, Füllstoffe, Thixotropiermittel und Beschleuniger ausgewählt werden.

Typische Vertreter aus der Gruppe der Haftvermittler auf Silanbasis sind 3-Methacryloxypropyltrimethoxysilan und 3-Methacryloxypropyltriethoxysilan.

Als Photostabilisatoren sind substituierte Benzotriazole, wie beispielsweise Tinuvin 171, Tinuvin 328, Tinuvin 900, Tinuvin 1130 (Ciba Geigy), gegebenenfalls in Kombination mit gehinderten Aminen, wie beispielsweise Tinuvin 292 (Ciba Geigy) geeignet. Zur Thermostabilisierung können gehinderte Phenole, wie beispielsweise Irganox 1010, Irganox 1076, Irganox 1035 oder Irganox 565 gegebenenfalls in Kombination mit Phosphiten, wie beispielsweise Tris-(nonylphenyl)-phosphit verwendet werden.

Die erfindungsgemäßen Zubereitungen werden üblicherweise gegen eine unerwünschte vorzeitige Polymerisation durch den Zusatz von phenolischen Verbindungen, wie Hydrochinon, Hydrochinonmonoalkylether und bzw. oder 2,6-Ditertiärbutyl-4-methylphenol stabilisiert bzw. inhibiert.

Geeignete Komplexbildner zur Komplexierung von Metallen sind Diamino-tetraessigsäure und ihre Salze, Oxalsäure, Askorbinsäure, Polyphenole und 8-Hydroxychinolin.

Als Farbstoffe können solche Verbindungen verwendet werden, die die Radikalbildung oder die radikalische Aushärtung nicht negativ beeinflussen. Demgemäß sind eine Vielzahl von Verbindungsklassen bzw. Einzelverbindungen einsetzbar. Ein typischer Vertreter der einsetzbaren Farbstoffe ist Kristallviolett.

Zur Verbesserung der Eigenschaften, zur Verringerung der Kosten oder zur Verringerung der Erwärmung bei der Aushärtung können den Zubereitungen organische und bzw. oder anorganische Füllstoffe zugegeben werden. Typische Vertreter sind feinteilige organische Hochpolymere und feinteilige mineralische Füllstoffe auf silikatischer Basis.

Mit Vorzug werden als Thixotropiermittel feindisperse Kieselsäuren verwendet, die gegebenenfalls silanisiert sein können.

Als Beschleuniger für den Peroxidzerfall, beispielsweise bei einer Verarbeitung der Zubereitungen nach einem Peroxid-Lack-Verfahren, kommen tertiäre aromatische Amine wie Dimethylamino-p-toloidin oder Bis(2-hydroxyethyl)amino-p-toluidin in Betracht.

Zur Verbesserung der Wasserbeständigkeit und Klimabeständigkeit der Verklebungen enthalten die Zubereitungen nach einer bevorzugten Variante der Erfindung Haftvermittler auf Silanbasis, wie beispielsweise Umsetzungsprodukte aus den vorstehend beschriebenen Epoxysilanen und NH- oder SH-terminierten Silanen in Konzentrationen von 0,01 bis 50 %, bevorzugt 0,1 bis 5 %, bezogen auf die Gesamtmasse der Zubereitung.

Als NH-terminierte Silane können z. B. eingesetzt werden:
3-Aminopropyl-trimethoxysilan, 3-Aminopropyl-triethoxysilan, 3-Aminopropyl-methyl-diethoxysilan, N-Methyl-3-aminopropyltrimethoxysilan, 3-Aminopropyl-tris(2-methoxyethoxy-ethoxy)silan, N-(Aminoethyl)-3-amino-propyltrimethoxysilan und triaminofunktionelle Trialkoxysilane.

Als SH-terminierte Silane kommen z. B. in Betracht 3-Mercaptopropyl-trimethoxy-silan, 3-Mercaptopropyl-triethoxy-silan und 3-Mercaptopropyl-methyl-dimethoxy-silan.

Die Umsetzungen der vorgenannten NH- oder SH-terminierten Silane mit den Epoxysilanen können mit oder ohne katalytische Beschleunigung bei Temperaturen von 10 bis 120°C ausgeführt werden. Als Katalysatoren für diese Umsetzungen sind tertiäre Amine und Phosphine, Ammonium- und Phosphoniumverbindungen, aber auch Säuren wie Methacrylsäure, Acrylsäure oder Diacrylsäure geeignet. Die Umsetzungen können sowohl als vorgelagerte Reaktionen, ggf. in geeigneten Verdünnermonomeren und/oder Säuremonomeren, ausgeführt werden als auch in Vorstufen der radikalisch polymerisierbaren Zubereitungen bei Raumtemperatur oder erhöhten Temperaturen erfolgen.

Bei einer bevorzugten Ausführungsform der Erfindung besteht die radikalisch polymerisierbare Zubereitung aus:
(A) 1 bis 20 Masseteilen eines Umsetzungsproduktes aus einem Epoxysilan und einem Acrylsäureaddukt;
(B) 30 bis 70 Masseteilen mindestens eines Acrylsäureaddukts;
(C) 10 bis 30 Masseteilen von Prepolymeren mit Doppelbindungsäquivalentmassen von 500 bis 4000 g/mol und Molmassen von 1500 bis 8000 g/mol;
(D) 10 bis 30 Masseteilen von Verdünnermonomeren mit Doppelbildungsäquivalentmassen von 67 bis 500 g/mol und Molmassen von 67 bis 1500 g/mol;
(E) 0,05 bis 5 Masseteilen von bei Bestrahlung mit Licht einer Wellenlänge von 280 bis 550 nm radikalbildenden Initiatoren und 0,1 bis 3 Masseteilen Peroxoverbindungen;
(F) 0 bis 50 Masseteilen von Modifikatoren, ausgewählt aus der Gruppe der Haftvermittler auf Silanbasis, Photostabilisatoren, Thermostabilisatoren, Inhibitoren, Komplexbildner, Farbstoffe, Füllstoffe, Thixotropiermittel und Beschleuniger,
wobei die Summe der Masseteile 100 beträgt.

Wenn die erfindungsgemäße Zubereitung zur Verbesserung der Wasserbeständigkeit und Klimabeständigkeit der damit hergestellten Verklebungen einen Haftvermittler auf Silanbasis als Komponente (F) enthält, so ist ein Anteil von 0,01 bis 50 Masseteilen Haftvermittler auf Silanbasis bevorzugt, wobei die Masseteile auf jeweils 100 Masseteile der gesamten Zubereitung bezogen sind und wobei der Haftvermittler hergestellt ist durch Umsetzung von Epoxysilanen mit NH- oder SH-terminierten Silanen. Zusätzlich zu dem Haftvermittler kann die Komponente (F) gegebenenfalls 0 bis 49,99 Masseteile von Modifikatoren enthalten, die ausgewählt sind aus der Gruppe der Photostabilisatoren, Thermostabilisatoren, Inhibitoren, Komplexbildner, Farbstoffe, Füllstoffe, Thixotropiermittel und Beschleuniger, wobei die Summe der Masseteile - wie bei allen Ausführungsformen der Erfindung - 100 beträgt.

Bei einer weiteren vorteilhaften Ausführungsform der einen Haftvermittler enthaltenden Zubereitung besteht diese aus
(A) 1 bis 20 Masseteilen eines Umsetzungsproduktes aus einem Epoxysilan und einem Acrylsäureaddukt;
(B) 10 bis 70 Masseteilen mindestens eines Acrylsäureaddukts;
(C) 10 bis 30 Masseteilen von Prepolymeren mit Doppelbindungsäquivalentmassen von 500 bis 4000 g/mol und Molmassen von 1500 bis 8000 g/mol;
(D) 10 bis 30 Masseteilen von Verdünnermonomeren mit Doppelbindungsäquivalentmassen von 67 bis 500 g/mol und Molmassen von 67 bis 1500 g/mol;
(E) 0,05 bis 5 Masseteilen von bei Bestrahlung mit Licht einer Wellenlänge von 280 bis 550 nm radikalbildenden Initiatoren und 0,1 bis 3 Masseteilen Peroxoverbindungen;
(F) 0,1 bis 10 Masseteilen Haftvermittler auf Silanbasis, hergestellt durch Umsetzung von Epoxysilanen mit NH- oder SH-terminierten Silanen sowie
   0 bis 49,9 Masseteilen von Modifikatoren, die ausgewählt sind aus der Gruppe der Photostabilisatoren, Thermostabilisatoren, Inhibitoren, Komplexbildner, Farbstoffe, Füllstoffe, Thixotropiermittel und Beschleuniger, wobei auch hier die Summe der Masseteile der Gesamtzubereitung 100 beträgt.

Besonders bevorzugt sind solche erfindungsgemäßen Zubereitungen, bei denen die Komponente (A) ein Umsetzungsprodukt aus 3-Glycidyloxypropyltrialkoxysilan und 2-Carboxyethylacrylsäure ist, wobei die beiden zuletzt genannten Verbindungen besonders vorteilhaft im Molverhältnis von 1 : 1 bis 1 : 100 in Gegenwart von Aminosilan in einem Molverhältnis Aminosilan zu 3-Glycidyloxypropyltrialkoxysilan von 1 : 10 bis 1 : 1000 umgesetzt worden sind.

Die Komponente (A) der erfindungsgemäßen Zubereitung ist bei einer anderen vorteilhaften Ausführungsform der Erfindung ein Umsetzungsprodukt aus 3-Glycidyloxypropyltrialkoxysilan und 2-Carboxyethylacrylsäure im Molverhältnis von 1 : 1 bis 1 : 100, das in Anwesenheit eines tertiären aromatischen Amins hergestellt worden ist, wobei das tertiäre aromatische Amin bevorzugt ein Ester der p-Dimethylaminobenzoesäure ist, und zwar besonders bevorzugt ein Ethylester oder ein n-Butylglykol-Ester in Mengen von 0,001 bis 10 Masse-%, bezogen auf die Gesamtmasse der Zubereitung.

Gemäß einer weiteren vorteilhaften Ausführungsform der Erfindung ist der Haftvermittler der Komponente (F) ein Produkt der Umsetzung von Epoxysilanen und NH- oder SH-terminierten Silanen in molarem Überschuß an 2-Carboxyethylacrylsäure bei Temperaturen von 10 bis 70°C, wobei das Molverhältnis von NH- oder SH-terminierten Silanen zu Epoxysilanen 1 : 0,5 bis 1 : 5 und das molare Verhältnis von Epoxysilanen zu 2-Carboxyethylacrylsäure 1 : 2 bis 1 : 100 beträgt und wobei die Umsetzung entweder in einer Vorlösung, getrennt von den übrigen Komponenten der Zubereitung, oder bei 20 bis 35°C in Anwesenheit aller Komponenten der fertig formulierten Zubereitung durchgeführt worden ist.

Die radikalisch polymerisierbaren Zubereitungen gemäß der Erfindung werden vorzugsweise als Reaktionsklebstoffe sowie zum Vergießen und Beschichten von Substraten verwendet. Bevorzugt ist dabei eine Verwendung, bei der die Härtung der Zubereitung durch Bestrahlung mit Licht einer Wellenlänge von 280 bis 550 nm, durch Erwärmung, mit Hilfe einer Beschleunigerzubereitung oder durch eine Kombination dieser Methoden erfolgt.

Besonders bevorzugt ist eine Verwendung, bei der die Härtung mindestens bis zur Hantierbarkeit der verklebten, vergossenen oder beschichteten Substrate innerhalb von 10 bis 500 ms erfolgt.

Bei einer anderen vorteilhaften Art der Verwendung der erfindungsgemäßen Zubereitungen als Reaktionsklebstoffe werden die zu verklebenden Substrate vollständig oder teilweise mit einer Beschleunigerzubereitung vorbehandelt. Anschließend läßt man gegebenenfalls verwendete Lösungsmittel ablüften oder lagert die vorbehandelten Substrate eine gewisse Zeit und trägt dann die radikalisch polymerisierbare Zubereitung auf die Substrate auf und bestrahlt mit Licht einer Wellenlänge von 280 bis 550 nm, wonach, falls gewünscht, durch weitere Bestrahlung und/oder Erwärmung eine Nachhärtung erfolgt. Die Erfindung wird nachfolgend anhand von Beispielen und Vergleichsbeispielen näher erläutert:

### Beispiele:

### Beispiel 1 (Komponente A)

### Herstellung eines Adduktes aus Epoxysilan und 2-Carboxyethylacrylsäure

In einem 2 1-Dreihalskolben mit Rührer sowie Lufteinleitung (1,9 l/h) und Luftauslaß wurden 519 g 2-Carboxyethylacrylsäure (technische Qualität) vorgelegt, bei 50°C 7 g Kaliumcarbonat zugegeben und bis zur Auflösung des Kaliumcarbonates gerührt. Es wurden 0,3 g Hydrochinonmonomethylether und 0,3 g 2,6-Di-tert.-butyl-4-methylphenol sowie 472 g 3-Glycidyloxypropyltrimethoxysilan zugegeben und die Reaktionsmischung drei Stunden bei 95 bis 100°C gerührt.

Das Reaktionsprodukt hatte eine Säureäquivalentmasse von 1008 g/mol und war ein schwach gelbes, klares Öl.

Beim Stehenlassen bei Raumtemperatur bildete sich ein Niederschlag, von dem abdekantiert wurde. Das Reaktionsprodukt wurde ohne weitere Reinigung eingesetzt.

### Beispiel 2 (Komponente A)

### Herstellung eines Adduktes aus Epoxysilan und 2-Carboxyethylacrylsäure

Es wurde die gleiche Versuchsanordnung, wie in Beispiel 1 angegeben, verwendet.

998,6 g 2-Carboxyethylacrylsäure, 0,35 g Hydrochinonmonomethylether und 0,2 g 2,6-Ditert.-butyl-4-methylphenol wurden vorgelegt und unter Rühren 47,2 g 3-Glycidyloxypropyltrimethoxysilan sowie 1,2 g 3-Aminopropyl-trimethoxysilan zugegeben.

Die Reaktion wurde bei 25 bis 30°C 50 Stunden lang fortgesetzt. Das Reaktionsgemisch enthielt weniger als 0,03 % 3-Glycidyloxypropyltrimethoxysilan und wurde ohne weitere Aufarbeitung eingesezt.

### Beispiel 3 (Komponente A)

### Herstellung eines Adduktes aus Epoxysilan und 2-Carboxyethylacrylsäure

In einer Versuchseinrichtung gemäß Beispiel 1 wurden 1023 g 2-Carboxyethylacrylsäure (technische Qualität), 0,2 g Hydrochinonmonomethylether und 0,18 g 2,6-Ditert.-butyl-4-methylphenol vorgelegt und unter Rühren 7,8 g 2-Butoxyethyl-4-(dimethylamino)-benzoat und danach 51,3 g 3-Glycidyloxypropyltrimethoxysilan zugegeben.

Die Mischung wurde 2 h bei 30 bis 35°C gerührt und danach 200 Stunden bei 25°C stehengelassen.

Das Reaktionsprodukt war eine wasserhelle, mittelviskose Flüssigkeit, in der keine Epoxygruppen mehr nachweisbar waren. Der Einsatz erfolgte ohne vorherige Reinigung.

### Beispiel 4 (Haftvermittler, Komponente F)

### Herstellung eines Adduktes aus Epoxysilan und Aminosilan

In einer Versuchseinrichtung gemäß Beispiel 1 wurden 225 g 3-Aminopropyltrimethoxysilan vorgelegt und unter Rühren bei 25°C 590 g 3-Glycidyloxypropyl-trimethoxysilan sowie 0,3 g 2-Carboxyethylacrylsäure zugegeben.

Das Reaktionsgemisch wurde bei 25°C ohne Rührung stehengelassen und enthielt nach 1000 Stunden Reaktionszeit weniger als 1 % der eingesetzten Glycidylverbindung. Das Reaktionsgemisch stellte ein gelbliches, niedrigviskoses Öl dar, das ohne Vorreinigung eingesetzt wurde.

### Beispiele 5 bis 12 (erfindungsgemäße Zubereitungen ohne Haftvermittler

In einem Labormischwerk wurden die in Tabelle 1 zusammengestellten Zubereitungen hergestellt.

Die mit diesen Zubereitungen erzielten Eigenschaften (Druckscherfestigkeiten bei der Verklebung von Polycarbonatsubstraten) sind in Tabelle 2 angegeben.

Für die Bestimmung der Anfangsgeschwindigkeit der Aushärtung wurde in einer 0,05 mm starken Schicht die Zubereitung auf einen Polycarbonat(PC)-Prüfkörper der Abmessungen 20 x 20 x 5 mm aufgetragen, mit einem weiteren Prüfkörper der gleichen Art bei einer Überlappung von 8 mm gefügt und mit einer Lampe, die im Bereich von 290 bis 490 nm emittiert, mit einer Intensität von 150 mW/cm² 0,3 Sekunden bestrahlt.

An den verklebten Prüfkörpern wurde 10 Minuten nach der Belichtung die Druckscherfestigkeit gemessen.

Bei der Beurteilung der Anfangsgeschwindigkeit der Aushärtung wird davon ausgegangen, daß bei Druckscherfestigkeitswerten von > 2 N/mm² und bei mit diesen Prüfkörpern vergleichbaren Fügepartnern eine ausreichende Fixierung sowie die Hantierbarkeit der verklebten Teile gewährleistet ist.

Die weitere Aushärtung kann dann ohne äußere Fixierung und ggfs. in freier Schüttung, d. h. in Form eines Haufwerks aus den verklebten Teilen, in einem nachgeschalteten Lichtschrank erfolgen.

Die Wirkung einer solchen Nachhärteeinrichtung wurde durch Verwendung eines Lichttunnels, emittierter Bereich 250 bis 600 nm, Intensität 45 mW/cm² simuliert.

Ein Teil der bereits 0,3 Sekunden belichteten, fixierten Prüf-körperpaare aus Polycarbonat wurden 60 bzw. 300 Sekunden in diesem Lichttunnel nachbelichtet, und nach einer 24-stündigen Lagerung im Dunkeln bei 25°C wurde die Druckscherfestigkeit der Verklebung bestimmt.

Die Mittelwerte der an jeweils 3 Prüfkörperpaaren bestimmten Druckscherfestigkeiten sind in Tabelle 2 angegeben.

Weiterhin wurden die Zubereitungen gemäß Tabelle 1 hinsichtlich der Auswirkungen der in der Anfangsphase der Aushärtung entstehenden Polymerisationswärme untersucht.

Hierbei wurden 0,05 g der Zubereitung auf einen Polycarbonat-Körper der Abmessungen 20 x 20 x 5 mm aufgetragen und die Zubereitung mit einer Lampe der Intensität 150 mW/cm² (290 bis 490 nm) 0,3 Sekunden bestrahlt.

Bei keiner der Zubereitungen entsprechend den erfindungsgemäßen Beispielen 5 bis 12 trat eine Blasenbildung oder eine Rauchentwicklung, also keine örtliche Überhitzung auf.

In einem anderen anwendungsrelevanten Test wurden Polyesterfolien der Abmessungen 20 x 50 x 0,1 mm bei einer Überlappung von 20 mm mit einer 0,070 mm starken Schicht der Zubereitungen gemäß den Beispielen 5 bis 12 verklebt, wobei die gleiche Lampe wie oben beschrieben zum Einsatz kam und die Belichtungszeit 0,3 Sekunden betrug.

Der Folienverbund wurde visuell beurteilt. Bei keinem der Verbunde, die mit den Zubereitungen gemäß den Beispielen 5 bis 12 gefertigt worden waren, trat ein Verziehen oder Welligwerden infolge der thermischen Belastung bei der Anhärtung ein.

Auch nach einer anschließenden Aushärtung in dem oben beschriebenen Lichttunnel traten bei 300 Sekunden Verweilzeit keine Formänderungen der Folienverbunde auf.

### Beispiele 13 bis 17 (erfindungsgemäße Zubereitungen mit Haftvermittler)

Tabelle 3 enthält die Zusammensetzungen weiterer erfindungsgemäßer Zubereitungen, die unter Verwendung des Haftvermittlers auf Silanbasis, dessen Herstellung in Beispiel 4 beschrieben ist, hergestellt wurden.

Die Ausprüfung dieser Zubereitungen nach den für die Beispiele 5 bis 12 beschriebenen Methoden ergab die in Tabelle 4 zusammengestellten Ergebnisse.

Zusätzlich wurde die Heißwasserbeständigkeit der PC/PC-Verklebungen (Druckscherfestigkeit von verklebten Prüfkörpern der Abmessungen 20 x 20 x 5 mm) geprüft.

Auch nach einer Lagerung in 70°C heißem Wasser über einen Zeitraum von 144 Stunden wurden noch brauchbare Verbundfestigkeiten erhalten. Die Prüfung der Zubereitungen gemäß den Beispielen 13 bis 17 hinsichtlich der Auswirkungen der in der Anfangsphase der Aushärtung entstehenden Polymerisationswärme ergab bei keiner der geprüften Zubereitungen eine Blasenbildung, Rauchentwicklung oder Formänderung von Folienverbunden. Die Untersuchungen wurden analog zu den für die Zubereitungen 5 bis 17 beschriebenen durchgeführt.

### Beispiel 18

Es wurde eine Mischung aus

| | |
|---|---|
| 60,4 | Masseteilen Carboxyethylacrylsäure |
| 4,7 | Masseteilen 3-Glycidyloxypropyl-trimethoxysilan |
| 0,5 | Masseteilen 2-Butoxyethyl-4-(dimethylamino)-benzoat |

bei 25°C hergestellt und 96h bei dieser Temperatur belassen.

Dieser Mischung wurde eine Lösung aus

| | |
|---|---|
| 15,7 | Masseteilen eines Umsetzungsproduktes aus einem Mischpolyetherdiamin einer Molmasse von 6500 g/mol mit 2 Mol eines Adduktes aus trimerisiertem Hexamethylendiisocyanat und 2 Mol Hydroxyethylmethacrylat |
| 6,3 | Masseteilen Hydroxypropylmethacrylat |
| 10,0 | Masseteilen Isobornylmethacrylat |
| 1,3 | Masseteilen Lucerin® TMPO (2,4,6-Trimethylbenzoyldiphenylphosphinoxid) |
| 1,0 | Masseteilen Tertiärbutylperbenzoat |
| 0,05 | Masseteilen Hydrochinonmonomethylether |
| 0,05 | Masseteilen 2,6-Ditert.butyl-4-methylphenol |

zugegeben und durch Vermischen die gebrauchsfertige Zubereitung hergestellt.

### Beispiel 19

Es wurde eine Mischung aus

| | |
|---|---|
| 60,4 | Masseteilen Carboxyethylacrylsäure |
| 4,7 | Masseteilen 3-Glycidyloxypropyltrimethoxysilan |
| 0,5 | Masseteilen 2-Butoxyethyl-4-(dimethylamino)-benzoat |
| 15,7 | Masseteilen eines Umsetzungsproduktes aus einem Mischpolyetherdiamin einer Molmasse von 6500 g/mol mit 2 Mol eines Adduktes aus trimerisiertem Hexamethylendiisocyanat mit 2 Mol Hydroxyethylmethacrylat |
| 6,0 | Masseteilen Hydroxypropylmethacrylat |
| 9,0 | Masseteilen Isobornylacrylat |
| 1,3 | Masseteilen Lucerin® TMPO |
| 1,3 | Masseteilen des Haftvermittlers gemäß Beispiel 4 |
| 1,0 | Masseteilen Tertiärbutylperbenzoat |
| 0,05 | Masseteilen Hydrochinonmonomethylether |
| 0,05 | Masseteilen 2,6-Ditert.butyl-4-methylphenol |

hergestellt und 200h nach der Herstellung ausgeprüft.

Eine Zusammenstellung der Ausprüfungsergebnisse der Zubereitungen gemäß der Beispiele 18 und 19 ist in Tabelle 5 enthalten.

### Beispiel 20

Die Zubereitung gemäß Beispiel 15 wurde zusätzlich mit p-Dimethylbenzoylperoxid versetzt und auf eine Konzentration von 0,5 % eingestellt.

Weiterhin wurde eine Aktivatorlösung, bestehend aus
3 Masseteilen Bis(p-dimethylaminophenyl)methan und
97 Masseteilen Isopropanol
bereitet.

Die Aktivatörlösung wurde auf Polycarbonat-Prüfkörper der Abmessungen 20 x 20 x 5 aufgetragen, und man ließ das Lösemittel verdunsten.

Dann wurde die mit Peroxid versehene Zubereitung auf einen der Prüfkörper aufgebracht und sofort mit dem anderen Prüfkörper mit 8 mm Überlappung gefügt. Die Verklebung war nach 3 Minuten hantierbar.

Die Verklebung wurde 2 Stunden dem Tageslicht ausgesetzt.

Die danach ermittelte Druckscherfestigkeit der Verklebung betrug 13,7 N/mm².

### Vergleichsbeispiel 1

Es wurde eine radikalisch polymerisierbare Zubereitung unter Verwendung von

| | |
|---|---|
| 64,5 | Masseteilen Acrylsäure |
| 17,8 | Masseteilen Hexandioldiacrylat |
| 10,5 | Masseteilen Trimethylpropantriacrylat |
| 3,2 | Masseteilen Methacryloyloxypropyltrimethoxysilan |
| 4,0 | Masseteilen Irgacure® 1700 (Photoinitiatorgemisch der Fa. Ciba Geigy) |

hergestellt.

Jeweils 0,05 g der Zubereitung wurden mit einer Lampe des Emissionsbereiches 320 - 550 nm bestrahlt.

Die Masse besaß eine sehr hohe Reaktionsgeschwindigkeit, so daß auch bei sehr kurzen Belichtungszeiten von 0,1 bis 0,3 Sekunden durch lokale Überhitzung eine Blasenbildung auftrat und gasförmige Produkte entwichen.

Bei der Verklebung von Kunststoffolien trat ein Verziehen und Welligwerden der Substrate ein.

Die erzielbaren Klebfestigkeiten waren mit < 2 N / mm² sehr gering.

### Vergleichsbeispiel 2

Es wurde eine radikalisch polymerisierbare Zubereitung unter Verwendung von

| | |
|---|---|
| 49,4 | Masseteilen Hydroxypropylmethacrylat |
| 38,7 | Masseteilen eines Umsetzungsproduktes aus einem Mischpolyetherdiol der Molmasse 6100 g/mol und Methacrylsäureanhydrid |
| 4,9 | Masseteilen Methacrylsäure |
| 3,0 | Masseteilen Methacryloxypropyl-trimethoxysilan |
| 4,0 | Masseteilen Irgacure® 1700 |

hergestellt.

Mit dieser Zubereitung wurden Druckscherfestigkeitsprüfungen an PC/PC-Verklebungen, wie für die Ausprüfung der erfindungsgemäßen Zubereitungen beschrieben, durchgeführt.

Nach 0,3 Sekunden Belichtung konnte keine Anfangsfestigkeit festgestellt werden. Erst nach Belichtungszeiten über 10 Sekunden waren die Verklebungen hantierbar.

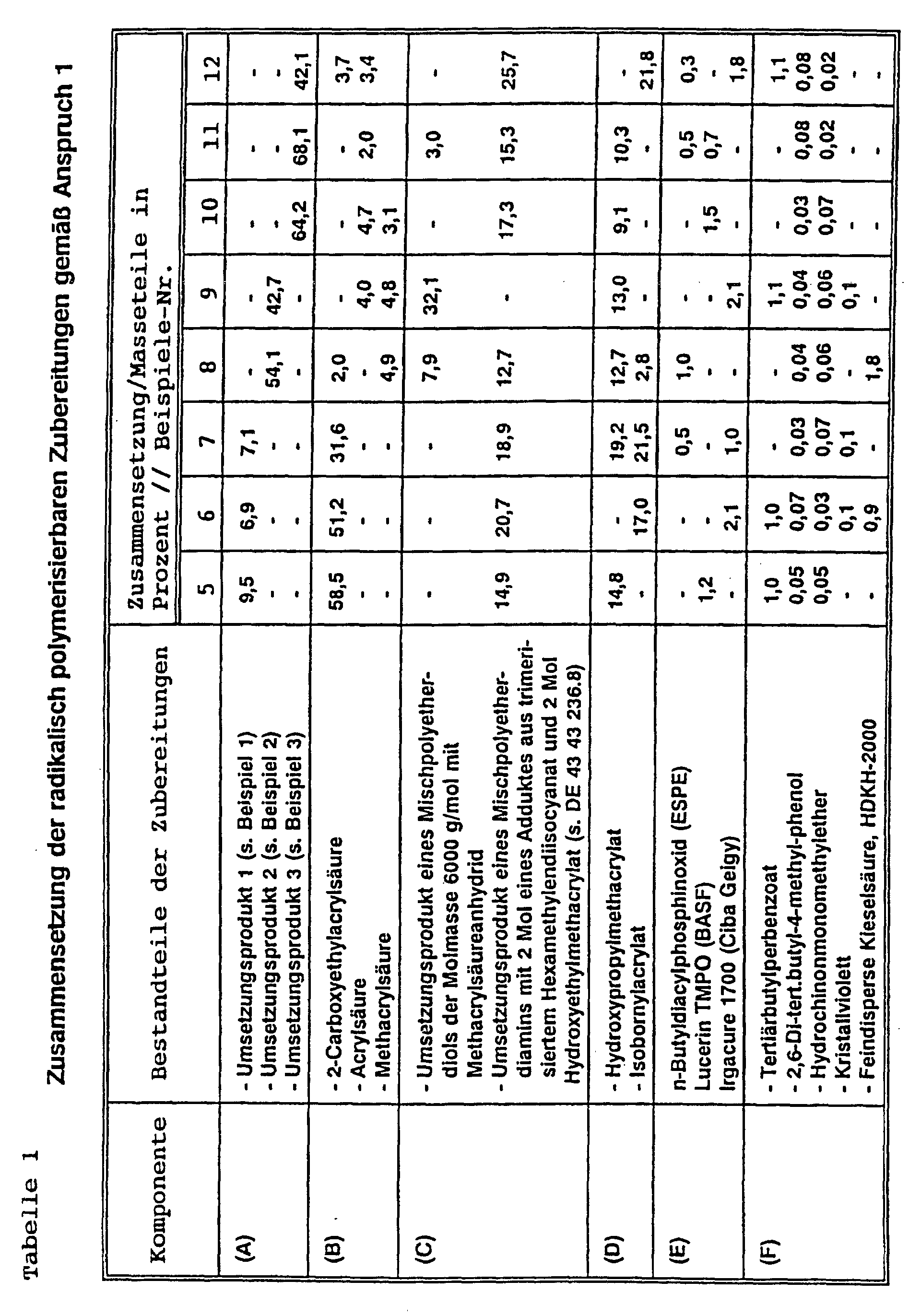

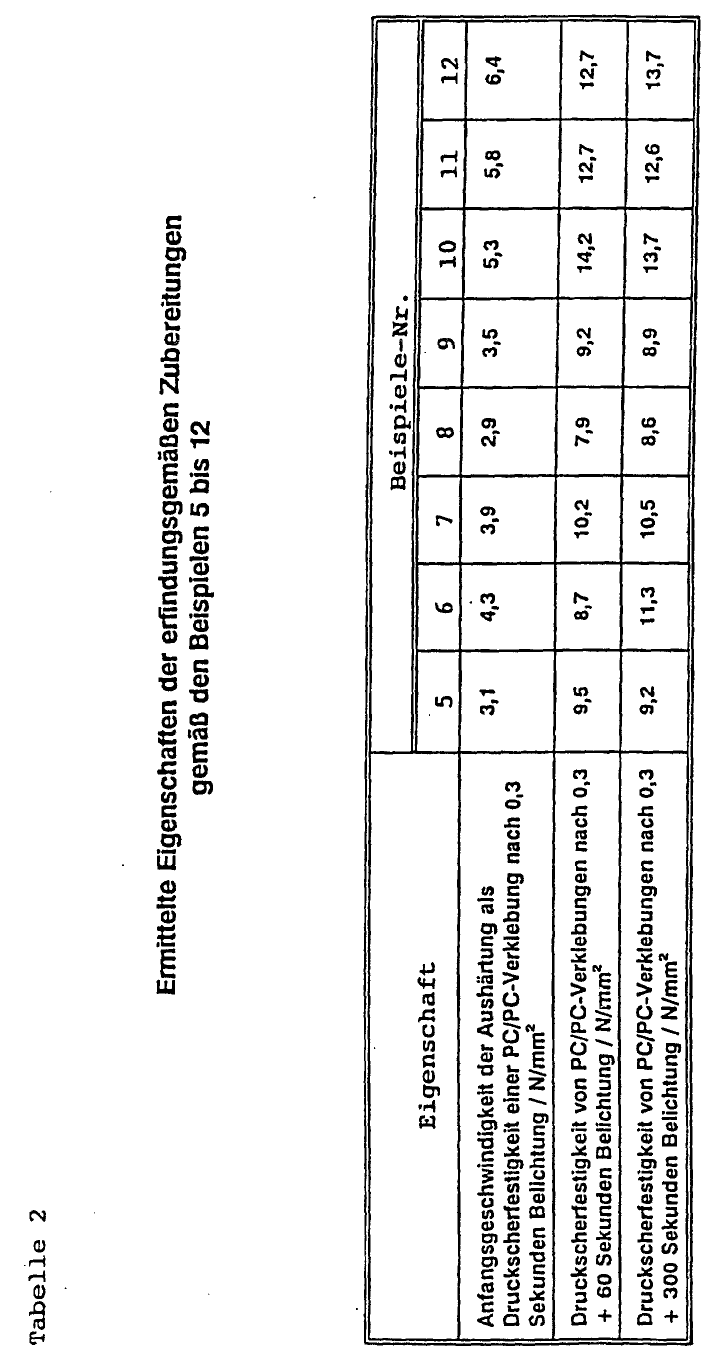

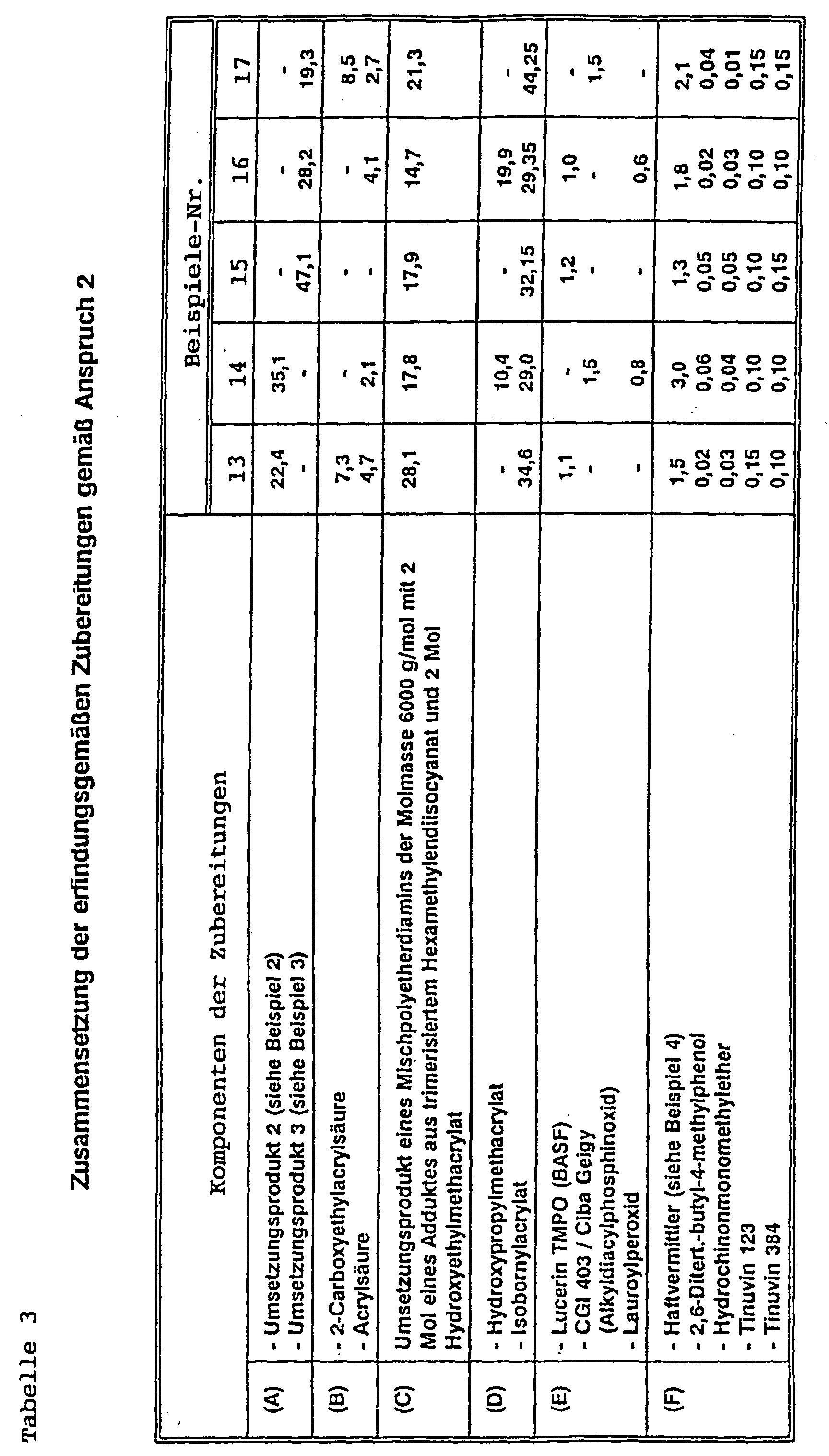

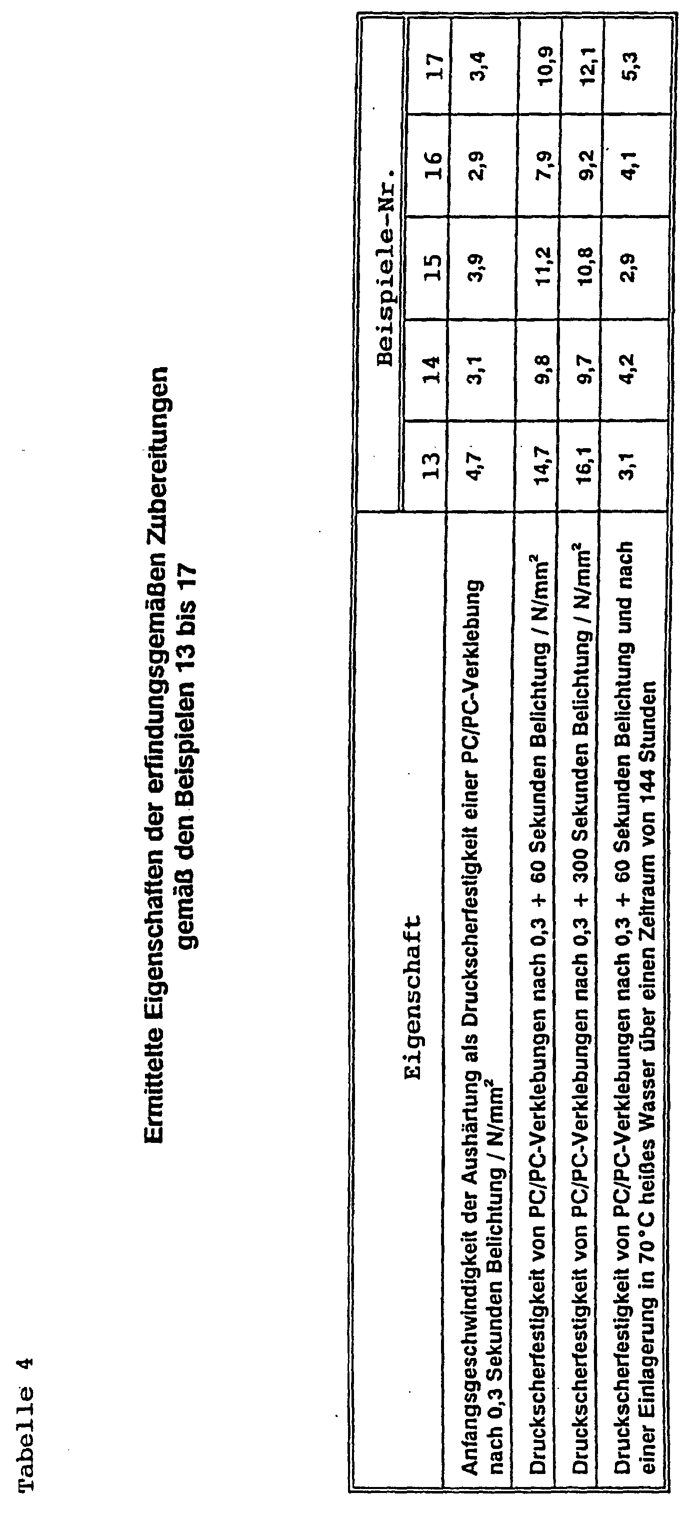

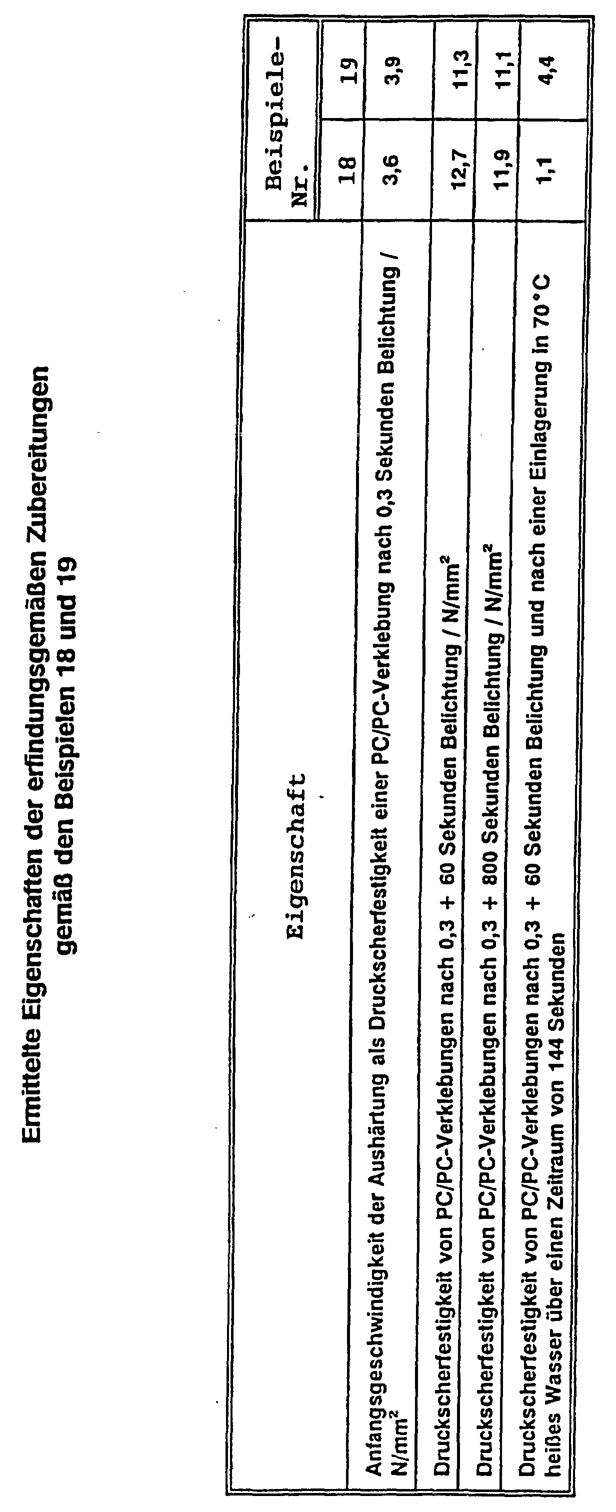

## Patentansprüche

1. Radikalisch polymerisierbare Zubereitung, bestehend aus:
(A) 0,01 bis 50 Masseteilen eines Umsetzungsproduktes aus einem Epoxysilan der allgemeinen Struktur 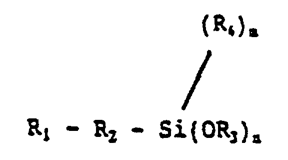 mit
R₁ = 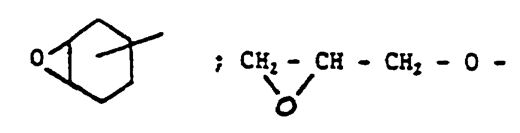 oder 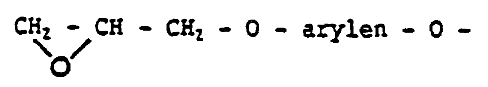
R₂ = alkylen-, arylen-, alkarylen- aralkylen-
R₃ = Alkyl mit 1 bis 4 C-Atomen
R₄ = Alkyl mit 1 bis 4 C-Atomen
ₙ=1,2,3
ₘ=0,1,2
und n + m = 3
und mindestens einem Vertreter der Gruppe Acrylsäure, Methacrylsäure, Acrylsäureaddukte der allgemeinen Formel 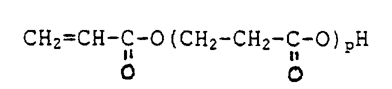 worin p eine ganze Zahl von 1 bis 10 bedeutet, und Umsetzungsprodukte von Acrylsäure und Methacrylsäure mit Diglycidylether-Dicarbonsäureaddukten, welche Umsetzungsprodukte erhältlich sind, indem man in einer ersten Stufe (Meth-) acrylsäure an den Diglycidylether in einem Molverhältnis von 0,8 : 1 bis 1,8 : 1 addiert und in einer zweiten Stufe die Dicarbonsäure addiert;
(B) 0,01 bis 80 Masseteilen von mindestens einem Vertreter der Gruppe Acrylsäure, Methacrylsäure, Acrylsäureaddukte der allgemeinen Formel 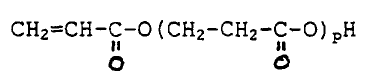 worin p eine ganze Zahl von 1 bis 10 bedeutet, und Umsetzungsprodukte von Acrylsäure und Methacrylsäure mit Diglycidylether-Dicarbonsäureaddukten, welche Umsetzungsprodukte erhältlich sind, indem man in einer ersten Stufe (Meth-) acrylsäure an den Diglycidylether in einem Molverhältnis von 0,8 : 1 bis 1,8 : 1 addiert und in einer zweiten Stufe die Dicarbonsäure addiert;
(C) 0,01 bis 50 Masseteilen von Prepolymeren mit Doppelbindungsäquivalentmassen von 500 bis 4000 g/mol und Molmassen von 1500 bis 8000 g/mol, die mindestens einer der folgenden Verbindungsklassen angehören: Polyethermulti(meth-) acrylate, Polyestermulti(meth-)acrylate, Alkylenmultiurethanmulti(meth-)acrylate, Polyethermultiurethanmulti (meth-) acrylate, Polyestermultiurethanmulti(meth-) acrylate, Polyethermultiharnstoff-multiurethan-multi(meth-)acrylate;
(D) 0,01 bis 50 Masseteilen von ein- und mehrfunktionellen (Meth-)acrylatmonomeren als Verdünnermonomere mit Doppelbindungsäquivalentmassen von 67 bis 500 g/mol und Molmassen von 67 bis 1500 g/mol;
(E) 0,01 bis 10 Masseteilen von bei Bestrahlung mit Licht einer Wellenlänge von 280 bis 550 nm radikalbildenden Initiatoren, Peroxoverbindungen oder Gemischen solcher Initiatoren mit Peroxoverbindungen;
(F) 0 bis 50 Masseteilen von Modifikatoren, ausgewählt aus der Gruppe der Haftvermittler auf Silanbasis, Photostabilisatoren, Thermostabilisatoren, Inhibitoren, Komplexbildner, Farbstoffe, Füllstoffe, Thixotropiermittel und Beschleuniger;
wobei die Summe der Masseteile 100 beträgt.

2. Zubereitung nach Anspruch 1, bestehend aus:
(A) 1 bis 20 Masseteilen eines Umsetzungsproduktes aus einem Epoxysilan und einem Acrylsäureaddukt;
(B) 30 bis 70 Masseteilen mindestens eines Acrylsäureaddukts;
(C) 10 bis 30 Masseteilen von Prepolymeren mit Doppelbindungsäquivalentmassen von 500 bis 4000 g/mol und Molmassen von 1500 bis 8000 g/mol;
(D) 10 bis 30 Masseteilen von Verdünnermonomeren mit Doppelbindungsäquivalentmassen von 67 bis 500 g/mol und Molmassen von 67 bis 1500 g/mol;
(E) 0,05 bis 5 Masseteilen von bei Bestrahlung mit Licht einer Wellenlänge von 280 bis 550 nm radikalbildenden Initiatoren und 0,1 bis 3 Masseteilen Peroxoverbindungen;
(F) 0 bis 50 Masseteilen von Modifikatoren, ausgewählt aus der Gruppe der Haftvermittler auf Silanbasis, Photostabilisatoren, Thermostabilisatoren, Inhibitoren, Komplexbildner, Farbstoffe, Füllstoffe, Thixotropiermittel und Beschleuniger;
wobei die Summe der Masseteile 100 beträgt.

3. Zubereitung nach Anspruch 1, **dadurch gekennzeichnet, daß** sie als Komponente
(F) 0,01 bis 50 Masseteile Haftvermittler auf Silanbasis, hergestellt durch Umsetzung von Epoxysilanen mit NH- oder SH-terminierten Silanen sowie
0 bis 49,99 Masseteile von Modifikatoren, ausgewählt aus der Gruppe der Photostabilisatoren, Thermostabilisatoren, Inhibitoren, Komplexbildner, Farbstoffe, Füllstoffe, Thixotropiermittel und Beschleuniger enthält, wobei die Summe der Masseteile 100 beträgt.

4. Zubereitung nach Anspruch 3, bestehend aus
(A) 1 bis 20 Masseteilen eines Umsetzungsproduktes aus einem Epoxysilan und einem Acrylsäureaddukt;
(B) 10 bis 70 Masseteilen mindestens eines Acrylsäureaddukts;
(C) 10 bis 30 Masseteilen von Prepolymeren mit Doppelbindungsäquivalentmassen von 500 bis 4000 g/mol und Molmassen von 1500 bis 8000 g/mol;
(D) 10 bis 30 Masseteilen von Verdünnermonomeren mit Doppelbindungsäquivalentmassen von 67 bis 500 g/mol und Molmassen von 67 bis 1500 g/mol;
(E) 0,05 bis 5 Masseteilen von bei Bestrahlung mit Licht einer Wellenlänge von 280 bis 550 nm radikalbildenden Initiatoren und 0,1 bis 3 Masseteilen Peroxoverbindungen;
(F) 0,1 bis 10 Masseteilen Haftvermittler auf Silanbasis, hergestellt durch Umsetzung von Epoxysilanen mit NH- oder SH-terminierten Silanen sowie
0 bis 49,9 Masseteilen von Modifikatoren, ausgewählt aus der Gruppe der Photostabilisatoren, Thermostabilisatoren, Inhibitoren, Komplexbildner, Farbstoffe, Füllstoffe, Thixotropiermittel und Beschleuniger;
wobei die Summe der Masseteile 100 beträgt.

5. Zubereitung nach einem der Ansprüche 1 bis 4, **dadurch gekennzeichnet, daß** die Komponente (A) ein Umsetzungsprodukt aus 3-Glycidyloxypropyltrialkoxysilan und 2-Carboxyethylacrylsäure ist.

6. Zubereitung nach Anspruch 5, **dadurch gekennzeichnet, daß** die Komponente (A) ein Umsetzungsprodukt aus 3-Glycidyloxypropyltrialkoxysilan und 2-Carboxyethylacrylsäure im Molverhältnis 1:1 bis 1:100 ist, das in Gegenwart von Aminosilan in einem Molverhältnis Aminosilan zu 3-Glycidyloxypropyltrialkoxysilan von 1:10 bis 1:1000, hergestellt worden ist.

7. Zubereitung nach Anspruch 5, **dadurch gekennzeichnet, daß** die Komponente (A) ein Umsetzungsprodukt aus 3-Glycidyloxypropyltrialkoxysilan und 2-Carboxyethylacrylsäure im Molverhältnis 1:1 bis 1:100 ist, das in Anwesenheit eines tertiären aromatischen Amins hergestellt worden ist.

8. Zubereitung nach Anspruch 7, **dadurch gekennzeichnet, daß** das tertiäre aromatische Amin ein Ester der p-Dimethylaminobenzoesäure ist.

9. Zubereitung nach Anspruch 8, **dadurch gekennzeichnet, daß** der Ester der p-Dimethylaminobenzoesäure ein Ethylester oder n-Butylglykol-Ester in Mengen von 0,001 bis 10 Masseprozent, bezogen auf die Gesamtmasse der Zubereitung, ist.

10. Zubereitung nach einem der Ansprüche 3 bis 9, **dadurch gekennzeichnet, daß** der Haftvermittler der Komponente (F) ein Produkt der Umsetzung von Epoxysilanen mit NH- oder SH-terminierten Silanen in molarem Überschuß an 2-Carboxyethylacrylsäure bei Temperaturen von 10 bis 70°C ist, wobei das Molverhältnis von NH- oder SH-terminierten Silanen zu Epoxysilanen 1 : 0,5 bis 1 : 5 und das molare Verhältnis von Epoxysilanen zu 2-Carboxyethylacrylsäure 1 : 2 bis 1 : 100 beträgt und wobei die Umsetzung entweder in einer Vorlösung, getrennt von den übrigen Komponenten, oder bei 20 bis 35°C in Anwesenheit aller Komponenten der fertig formulierten Zubereitung durchgeführt worden ist.

11. Verwendung der radikalisch polymerisierbaren Zubereitung gemäß einem der Ansprüche 1 bis 10 als Reaktionsklebstoff sowie zum Vergießen und Beschichten von Substraten.

12. Verwendung nach Anspruch 11, **dadurch gekennzeichnet, daß** die Härtung der Zubereitung durch Bestrahlung mit Licht einer Wellenlänge von 280 bis 550 nm, durch Erwärmung, mit Hilfe einer Beschleunigerzubereitung oder durch eine Kombination dieser Methoden erfolgt.

13. Verwendung nach Anspruch 12, **dadurch gekennzeichnet, daß** die Härtung mindestens bis zur Hantierbarkeit der verklebten, vergossenen oder beschichteten Substrate innerhalb von 10 bis 500 ms erfolgt.

14. Verwendung nach Anspruch 12 oder 13, **dadurch gekennzeichnet, daß** die zu verklebenden Substrate vollständig oder teilweise mit einer Beschleunigerzubereitung vorbehandelt werden, nach dem Ablüften der gegebenenfalls verwendeten Lösungsmittel oder nach einer Lagerzeit der vorbehandelten Substrate die radikalisch polymerisierbare Zubereitung auf die Substrate aufgetragen und mit Licht einer Wellenlänge von 280 bis 550 nm bestrahlt wird, wonach gewünschtenfalls durch weitere Bestrahlung und/oder Erwärmung eine Nachhärtung erfolgt.

## Claims

1. A radically polymerisable preparation, consisting of:
(A) 0.01 to 50 parts by mass of a reaction product from an epoxy silane of the general structure 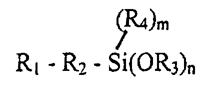 with
R₁ = 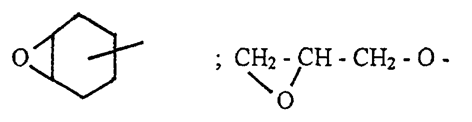 or 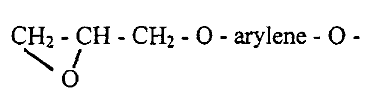
R₂ = alkylene-, arylene-, alkarylene-, aralkylene-
R₃ = alkyl having 1 to 4 C-atoms
R₄ = alkyl having 1 to 4 C-atoms
n = 1, 2, 3
m = 0, 1, 2
and n + m = 3
and at least one representative of the group acrylic acid, methacrylic acid, adducts of acrylic acid having the general formula 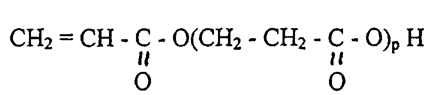 wherein p represents an integer of from 1 to 10, and products of the reaction of acrylic acid and methacrylic acid with adducts of diglycidyl ether and dicarboxylic acid which reaction products being obtainable by adding, in a first step, (meth-) acrylic acid to the diglycidyl ether in a molar ratio of from 0.8 : 1 to 1.8 : 1 and adding, in a second step, the dicarboxylic acid;
(B) 0.01 to 80 parts by mass of at least one representative of the group acrylic acid, methacrylic acid, adducts of acrylic acid having the general formula 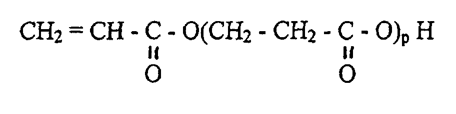 wherein p represents an integer of from 1 to 10, and products of the reaction of acrylic acid and methacrylic acid with adducts of diglycidyl ether and dicarboxylic acid which reaction products being obtainable by adding, in a first step, (meth-) acrylic acid to the diglycidyl ether in a molar ratio of from 0.8 : 1 to 1.8 : 1 and adding, in a second step, the dicarboxylic acid;
(C) 0.01 to 50 parts by mass of prepolymers having double-bond equivalent masses of 500 to 4000 g/mol and molecular masses of 1500 to 8000 g/mol and being a member of at least one of the following classes of compounds: polyether multi(meth-)acrylates, polyester multi(meth-)acrylates, alkylenemultiurethane multi(meth-) acrylates, polyethermultiurethane multi(meth-)acrylates, polyestermultiurethane multi(meth-)acrylates, polyethermultiurea-multiurethane multi(meth-)acrylates;
(D) 0.01 to 50 parts by mass of mono- and polyfunctional (meth-)acrylate monomers as diluting monomers having double-bond equivalent masses of 67 to 500 g/mol and molecular masses of 67 to 1500 g/mol;
(E) 0.01 to 10 parts by mass of initiators, forming radicals when irradiated with light having a wave length of 280 to 550 nm, peroxo compounds or mixtures of such initiators with peroxo compounds;
(F) 0 to 50 parts by mass of modifiers, selected from the group consisting of silane-based adhesion promoters, photostabilisers, thermostabilisers, inhibitors, complexing agents, dyestuffs, fillers, thixotropifying agents and accelerators,
wherein the sum of the parts by mass is 100.

2. A preparation according to claim 1, consisting of:
(A) 1 to 20 parts by mass of a reaction product from an epoxy silane and an acrylic acid adduct;
(B) 30 to 70 parts by mass of at least one acrylic acid adduct;
(C) 10 to 30 parts by mass of prepolymers having double-bond equivalent masses of 500 to 4000 g/mol and molecular masses of 1500 to 8000 g/mol;
(D) 10 to 30 parts by mass of diluting monomers having double-bond equivalent masses of 67 to 500 g/mol and molecular masses of 67 to 1500 g/mol;
(E) 0.05 to 5 parts by mass of initiators, forming radicals when irradiated with light having a wave length of 280 to 550 nm, and 0.1 to 3 parts by mass of peroxo compounds;
(F) 0 to 50 parts by mass of modifiers, selected from the group consisting of silane-based adhesion promoters, photostabilisers, thermostabilisers, inhibitors, complexing agents, dyestuffs, fillers, thixotropifying agents and accelerators,
wherein the sum of the parts by mass is 100.

3. A preparation according to claim 1, **characterised in that** it contains, as component (F):
0.01 to 50 parts by mass of silane-based adhesion promoters, prepared by reaction of epoxy silanes with NH- or SH-terminated silanes, and
0 to 49.99 parts by mass of modifiers, selected from the group of photostabilisers, thermostabilisers, inhibitors, complexing agents, dyestuffs, fillers, thixotropifying agents and accelerators,
wherein the sum of the parts by mass is 100.

4. A preparation according to claim 3, consisting of:
(A) 1 to 20 parts by mass of a reaction product from an epoxy silane and an acrylic acid adduct;
(B) 10 to 70 parts by mass of at least one acrylic acid adduct;
(C) 10 to 30 parts by mass of prepolymers having double-bond equivalent masses of 500 to 4000 g/mol and molecular masses of 1500 to 8000 g/mol;
(D) 10 to 30 parts by mass of diluting monomers having double-bond equivalent masses of 67 to 500 g/mol and molecular masses of 67 to 1500 g/mol;
(E) 0.05 to 5 parts by mass of initiators, forming radicals when irradiated with light having a wave length of 280 to 550 nm, and 0.1 to 3 parts by mass of peroxo compounds;
(F) 0.1 to 10 parts by mass of silane-based adhesion promoters, prepared by reaction of epoxy silanes with NH- or SH-terminated silanes, and
0 to 49.9 parts by mass of modifiers, selected from the group of photostabilisers, thermostabilisers, inhibitors; complexing agents, dyestuffs, fillers, thixotropifying agents and accelerators,
wherein the sum of the parts by mass is 100.

5. A preparation according to any one of claims 1 to 4, **characterised in that** the component (A) is a reaction product of 3-glycidyloxypropyl trialkoxysilane and 2-carboxyethylacrylic acid.

6. A preparation according to claim 5, **characterised in that** the component (A) is a reaction product of 3-glycidyloxypropyl trialkoxysilane and 2-carboxyethylacrylic acid in a molar ratio of 1:1 to 1:100 which has been prepared in the presence of aminosilane in a molar ratio of aminosilane to 3-glycidyloxypropyl trialkoxysilane of 1:10 to 1:1000.

7. A preparation according to claim 5, **characterised in that** the component (A) is a reaction product of 3-glycidyloxypropyl trialkoxysilane and 2-carboxyethylacrylic acid in a molar ratio of 1:1 to 1:100 which has been prepared in the presence of a tertiary aromatic amine.

8. A preparation according to claim 7, **characterised in that** the tertiary aromatic amine is an ester of p-dimethylaminobenzoic acid.

9. A preparation according to claim 8, **characterised in that** the ester of the p-dimethylaminobenzoic acid is an ethyl ester or n-butylglycol ester in quantities of 0.001 to 10 percent by mass in relation to the total mass of the preparation.

10. A preparation according to any one of claims 3 to 9, **characterised in that** the adhesion promoter of the component (F) is a product of the reaction of epoxy silanes with NH- or SH-terminated silanes in a molar excess of 2-carboxyethyl acrylic acid at temperatures of 10°C to 70°C, wherein the molar ratio of NH- or SH-terminated silanes to epoxy silanes is 1:0.5 to 1:5 and the molar ratio of epoxy silanes to 2-carboxyethylacrylic acid is 1:2 to 1:100 and wherein the reaction has been carried out either in a presolution, separated from the remaining components, or at 20°C to 35°C in the presence of all the components of the finally formulated preparation.

11. Use of the radically polymerisable preparation according to any one of claims 1 to 10 as a chemically reactive adhesive and for the casting and coating of substrates.

12. Use according to claim 11, **characterised in that** the preparation is hardened by irradiation with light having a wave length of 280 to 550 nm, by heating, by means of an accelerator preparation or by a combination of these methods.

13. Use according to claim 12, **characterised in that** hardening is carried out within 10 to 500 ms at least until the glued, cast or coated substrate is handleable.

14. Use according to claim 12 or 13, **characterised in that** the substrates to be glued are completely or partially pretreated with an accelerator preparation and, after deaeration of any solvents used or after a storage time of the pretreated substrates, the radically polymerisable preparation is applied to the substrates and is irradiated with light having a wave length of 280 to 550 nm, after which post-hardening is carried out, if desired, by further irradiation and/or heating.

## Revendications

1. Préparation polymérisable par polymérisation radicalaire, constituée :
(A) de 0,01 à 50 parties en masse d'un produit de la réaction d'un époxysilàne de structure générale 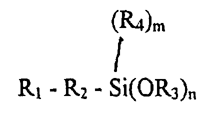 avec
R₁ = 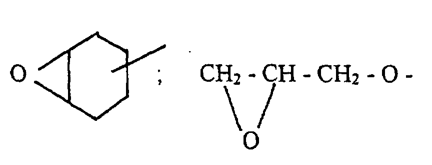 ou 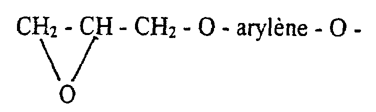
R₂ = alkylène, arylène, alkarylène, aralkylène
R₃ = alkyle avec 1 à 4 atomes C
R₄ = alkyle avec 1 à 4 atomes C
n = 1, 2, 3
m=0, 1,2
et n + m = 3
et d'au moins un représentant du groupe comprenant l'acide acrylique, l'acide méthacrylique et les produits d'addition de l'acide acrylique de formule générale 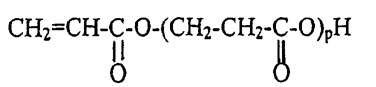 dans laquelle p est un nombre entier de 1 à 10, et des produits de réaction de l'acide acrylique et de l'acide méthacrylique avec des produits d'addition de diglycidyléther et d'acide dicarboxylique, lesdits produits de réaction pouvant être obtenus en additionnant, dans une première étape, de l'acide (meth)acrylique au diglycidyléther dans un rapport molaire de 0,8:1 à 1,8:1 et en additionnant, dans une deuxième étape, l'acide dicarboxylique ;
(B) de 0,01 à 80 parties en masse d'au moins un représentant du groupe comprenant l'acide acrylique, l'acide méthacrylique, les produits d'addition de l'acide acrylique de la formule générale 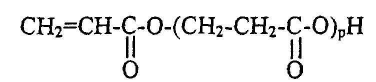 dans laquelle p est un nombre entier de 1 à 10, et des produits de réaction de l'acide acrylique et de l'acide méthacrylique avec des produits d'addition de diglycidyléther et d'acide dicarboxylique, lesdits produits de réaction pouvant être obtenus en additionnant, dans une première étape, de l'acide (meth)acrylique au diglycidyléther dans un rapport molaire de 0,8:1 à 1,8:1 et en additionnant, dans une deuxième étape, l'acide dicarboxylique ;
(C) de 0,01 à 50 parties en masse de prépolymères ayant une masse équivalente de double liaison de 500 à 4000 g/mole et une masse molaire de 1500 à 8000 g/moles, qui appartiennent au moins à une des classes de composés suivantes : polyéthermulti(meth)acrylates, polyestermulti(meth)acrylates, alkylènemultiuréthanemulti(meth)acrylates, polyéthermultiuréthanemulti(meth)acrylates, polyestermultiuréthanemulti(meth)acrylates polyéthermultiurée-multiuréthane-multi(meth)acrylates ;
(D) de 0,01 à 50 parties en masse de monomères de (meth)acrylate à une ou plusieurs fonctions servant de monomères diluants ayant des masses équivalentes de double liaison de 67 à 500 g/mole et des masses molaires de 67 à 1500 g/mole ;
(E) de 0,01 à 10 parties en masse d'amorceurs formant des radicaux sous l'effet d'une exposition à une lumière ayant une longueur d'onde de 280 à 550 nm, de composés peroxo ou de mélanges de ces amorceurs et de composés peroxo ;
(F) de 0 à 50 parties en masse de modifiants choisis dans le groupe comprenant les promoteurs d'adhérence à base de silanes, les photostabilisants, les stabilisants thermiques, les inhibiteurs, les complexants, les colorants, les matières de charge, les agents thixotropifiants et les accélérateurs ;
la somme des parties en masse étant égale à 100.

2. Préparation selon la revendication 1, constituée :
(A) de 1 à 20 parties en masse d'un produit de réaction d'un époxysilane et d'un produit d'addition de l'acide acrylique ;
(B) de 30 à 70 parties en masse d'au moins un produit d'addition de l'acide acrylique ;
(C) de 10 à 30 parties en masse de prépolymères ayant une masse équivalente de double liaison de 500 à 4000 g/mole et une masse molaire de 1500 à 8000 g/mole ;
(D) de 10 à 30 parties en masse de monomères diluants ayant une masse équivalente de double liaison de 67 à 500 g/mole et une masse molaire de 67 à 1500 g/mole ;
(E) de 0,05 à 5 parties en masse d'amorceurs formant des radicaux sous l'effet d'une exposition à une lumière ayant une longueur d'onde de 280 à 550 nm, et de 0,1 à 3 parties en masse de composés peroxo ;
(F) de 0 à 50 parties en masse de modifiants choisis dans le groupe comprenant les promoteurs d'adhérence à base de silanes, les photostabilisants, les stabilisants thermiques, les inhibiteurs, les complexants, les colorants, les matières de charge, les agents thixotropifiants et les accélérateurs ;
la somme des parties en masse étant égale à 100.

3. Préparation selon la revendication 1, **caractérisée en ce qu'**elle contient comme constituant
(F) de 0,01 à 50 parties en masse d'un promoteur d'adhérence à base de silanes, préparé par la réaction d'époxysilanes avec des silanes à terminaison NH- ou SH-, et
de 0 à 49,99 parties en masse de modifiants choisis dans le groupe comprenant les photostabilisants, les stabilisants thermiques, les inhibiteurs, les complexants, les colorants, les matières de charge, les agents thixotropifiants et les accélérateurs,
la somme des parties en masse étant égale à 100.

4. Préparation selon la revendication 3, constituée :
(A) de 1 à 20 parties en masse d'un produit de réaction d'un époxysilane et d'un produit d'addition de l'acide acrylique ;
(B) de 10 à 70 parties en masse d'au moins un produit d'addition de l'acide acrylique ;
(C) de 10 à 30 parties en masse de prépolymères ayant une masse équivalente de double liaison de 500 à 4000 g/mole et une masse molaire de 1500 à 8000 g/mole ;
(D) de 10 à 30 parties en masse de monomères diluants ayant une masse équivalente de double liaison de 67 à 500 g/mole et une masse molaire de 67 à 1500 g/mole ;
(E) de 0,05 à 5 parties en masse d'amorceurs formant des radicaux sous l'effet d'une exposition à une lumière ayant une longueur d'onde de 280 à 550 nm et de 0,1 à 3 parties en masse de composés peroxo ;
(F) de 0,1 à 10 parties en masse de promoteurs d'adhérence à base de silanes, préparé par la réaction d'époxysilanes avec des silanes à terminaison NH- ou SH-, et
de 0 à 49,99 parties en masse de modifiants choisis dans le groupe comprenant les photostabilisants, les stabilisants thermiques, les inhibiteurs, les complexants, les colorants, les matières de charge, les agents thixotropifiants et les accélérateurs,
la somme des parties en masse étant égale à 100.

5. Préparation selon l'une des revendications 1 à 4, **caractérisée en ce que** le constituant (A) est un produit de la réaction du 3-glycidyloxypropyltrialcoxysilane et d'acide 2-carboxyéthylacrylique.

6. Préparation selon la revendication 5, **caractérisée en ce que** le constituant (A) est un produit de la réaction du 3-glycidyloxypropyltrialcoxysilane et d'acide 2-carboxyéthylacrylique selon un rapport molaire de 1:1 à 1:100, qui a été préparé en présence d'aminosilane, selon un rapport molaire de l'aminosilane au 3-glycidyloxypropyltrialcoxysilane de 1:10 à 1:1000.

7. Préparation selon la revendication 5, **caractérisée en ce que** le constituant (A) est un produit de la réaction du 3-glycidyloxypropyltrialcoxysilane et d'acide 2-carboxyéthylacrylique selon un rapport molaire de 1:1 à 1:100, qui a été préparé en présence d'une amine aromatique tertiaire.

8. Préparation selon la revendication 7, **caractérisée en ce que** l'amine aromatique tertiaire est un ester de l'acide p-diméthylaminobenzoïque.

9. Préparation selon la revendication 8, **caractérisée en ce que** l'ester de l'acide p-diméthylaminobenzoïque est un ester éthylique ou un ester du n-butylglycol, en des quantités de 0,001 à 10 % en masse par rapport à la masse totale de la préparation.

10. Préparation selon l'une des revendications 3 à 9, **caractérisée en ce que** le promoteur d'adhérence du constituant (F) est un produit de la réaction d'époxysilanes avec des silanes à terminaison NH- ou SH-, avec un excès molaire d'acide 2-carboxyéthylacrylique, à des températures de 10 à 70°C, le rapport molaire des silanes à terminaison NH- ou SH- aux époxysilanes étant de 1:0,5 à 1:5, et le rapport molaire des époxysilanes à l'acide 2-carboxyéthylacrylique étant de 1:2 à 1:100, et la réaction étant mise en oeuvre soit dans une présolution, séparément des autres constituants, ou encore à 20-35°C, en présence de tous les constituants de la préparation formulée finie.

11. Utilisation de la préparation polymérisable par polymérisation radicalaire selon l'une des revendications 1 à 10, en tant qu'adhésif réactif, et pour enrober et revêtir des substrats.

12. Utilisation selon la revendication 11, **caractérisée en ce que** le durcissement de la préparation est réalisé par exposition à une lumière ayant une longueur d'onde de 280 à 550 nm, par chauffage, à l'aide d'une préparation accélératrice, ou encore par une combinaison de ces méthodes.

13. Utilisation selon la revendication 12, **caractérisée en ce que** le durcissement de la préparation au moins jusqu'à ce que les substrats collés, enrobés ou enduits puissent être manipulés, est réalisé en 10 à 500 ms.

14. Utilisation selon la revendication 12 ou 13, **caractérisée en ce que** les substrats à coller ont au préalable subi un traitement complet ou partiel avec une préparation accélératrice, **en ce que**, après dégazage des solvants éventuellement utilisés, ou après un temps de stockage des substrats prétraités, la préparation polymérisable par polymérisation radicalaire est appliquée sur les substrats et est exposée à une lumière ayant une longueur d'onde de 280 à 550 nm, après quoi on procède, éventuellement, à un post-durcissement grâce à une irradiation et/ou un chauffage supplémentaires.
